# EUROPÄISCHE PATENTANMELDUNG

(11) **EP 1 315 332 A2**
(43) Veröffentlichungstag der Anmeldung: **28.05.2003**
(21) Anmeldenummer: 02021970.5
(22) Anmeldetag: 30.09.2002
(51) Int. Cl.: H04L 12/26

(54) **Programmierbarer Datenlogger für CAN-Systeme**

(30) Priorität: 22.11.2001 DE 10157188
(71) Anmelder: G. i.N.mbH, 64347 Griesheim (DE)
(72) Erfinder: Schoenberg, Andreas, Dipl.-Inform., 76228 Karlsruhe (DE); Bassenauer, Wolfgang, 64347 Griesheim (DE)
(74) Vertreter: 2K Patentanwälte, Kewitz & Kollegen

(57) **Zusammenfassung**

Die Erfindung betrifft Vorrichtungen und Verfahren zum Loggen von Informationen auf mindestens einem Bussystem, insbesondere einem CAN - System, mit einer Schnittstelle zum Bussystem, über die ein Datenverkehr auf dem Bussystem analysierbar ist, mit einer Verarbeitungseinheit, die bestimmbare Daten aus dem Datenverkehr filtert, um diese Daten in einem Speicher abzulegen, mit einer Kommunikationseinheit, die eine drahtlose Kommunikation erlaubt, um vorzugsweise die im Speicher abgelegten Daten zu übertragen, mit einem Gehäuse, wobei das Gehäuse und die enthaltenden Komponenten hinsichtlich ihrer Größe, so ausgebildet sind, dass ein mobiler Einsatz, insbesondere im KFZ, möglich ist.

## Beschreibung

Die Erfindung betrifft eine Vorrichtung und ein Verfahren zum Loggen von Informationen auf mindestens einem Bussystem.

Bei den sehr aufwändigen und im Aufbau immer komplexeren Kraftfahrzeugen wird es in Zukunft unvermeidbar sein Bussysteme zu verwenden, die zur Kommunikation mit den einzelnen Baugruppen eingesetzt werden. Durch die Verwendung von Bussystemen wird die Anzahl der Kabel und somit die Komplexität des Kabelbaums enorm reduziert. Hiermit geht einher, dass die Fahrzeuge leichter und somit verbrauchsärmer gestaltet werden können.
Die Verwendung von Bussystemen ist jedoch auch fehleranfällig. Auf Grund der steigenden Komplexität können oftmals Simulationen nicht zu einem umfassenden Ergebnis führen. Hieraus ergibt sich, dass die Fahrzeuge längeren Tests unterzogen werden müssen, um Fehler zu erkennen, die eine Simulation nicht hervorgebracht hätte.
Bei diesen Tests werden die Funktionen des Fahrzeuges durch Analyse des Bussystems überprüft. Sollten Fehler auftreten, so ist es von Vorteil, wenn der Busverkehr über einen längeren Zeitraum aufgezeichnet wurde. Aus den ermittelten Daten kann dann ein Rückschluss auf die Herkunft des Fehlers gezogen werden.

Aus der DE 35 40599 ist ein Diagnosesystem für ein Kfz bekannt. Das Diagnosesystem ist mit einem seriellen Bus verbunden. Die Fehlermeldungen werden in einem nichtflüchtigen Speicher abgelegt. Die Fehlermeldungen können aus den definierten Speicherbereichen des Steuersystems ausgelesen und auf dem Anzeigesystem dargestellt werden. Eine Diagnose wird hierbei durch Aufstecken eines Diagnosesteckers eingeleitet.

Aus der De 3229411 ist eine Vorrichtung zur Selbstüberwachung bekannt. Dieses System umfasst einen Speicherbereich zum Abspeichern von Fehlerdaten und Fehleradressen, eine Fehleranzeige und einen dem Steuersystem zugeordneten Mikrorechner mit Eingabe und Anzeigeeinheit. Dieses System ist jedoch relativ aufwändig und benötigt ein spezielles Fahrzeuginformationssystem mit getrennter Anzeige und Eingabeeinheit. Sollten ferner mit dem System mehrere elektronische Steuersysteme überwacht werden, so ist vom Fahrzeuginformationssystem zum jeweiligen Steuersystem jeweils ein eigenes Bussystem erforderlich.

Aufgabe der Erfindung ist es, ein Diagnosesystem für Bussysteme, insbesondere für den CAN-Bus bereitzustellen, das variabel eingesetzt werden kann und die Möglichkeit eröffnet, eine Vielzahl von Fehlern zu analysieren.

Diese Aufgabe wird durch Erfindungen mit Merkmalen der unabhängigen Ansprüche gelöst. Vorteilhafte Weiterbildungen der Erfindungen sind in den Unteransprüchen gekennzeichnet.

Ein erster Bestandteil der vorliegenden Erfindung ist eine Vorrichtung zum Loggen von Informationen auf mindestens einem Bussystem, insbesondere in einem CAN-System. CAN-Systeme werden auf Grund ihrer besonderen Vorzüge, wie Determinismus, Ausfallsicherheit und Leistungsfähigkeit im Kfz - Bereich eingesetzt. Über eine Schnittstelle zum Bussystem kann auf den Datenverkehr zugegriffen werden.

Durch eine Bearbeitungseinheit, die vorzugsweise als Mikroprozessor ausgebildet ist, werden bestimmbare Daten aus dem Datenverkehr gefiltert. Das Bestimmen der Daten erfolgt durch ein Programm, das im Vorfeld kompiliert wurde. Durch spezifische Programmkonstrukte kann festgelegt werden, welche Daten zu Filtern sind. Die so gefilterten Daten werden in einem Speicher abgelegt. Bei diesem Speicher handelt es sich um einen FIFO - Speicher, der sich regelmäßig im Bereich von ein bis zwei MB bewegt. Andere Größen sind ebenfalls denkbar jedoch sei daraufhingewiesen, dass eine Vielzahl an Daten eine Auswertung komplexer werden lässt. Der FIFO - Speicher kann ebenfalls durch eine entsprechende Speicherverwaltung mit einem RAM - Speicher simuliert werden. In bevorzugten Ausführungsformen sind mehrere separate FIFO - Speicher vorgesehenen.

Der Einsatz im KFZ bringt es mit sich, dass die erfindungsgemäße Vorrichtung an Orten befestigt ist, die die Insassen nicht stören. Um die gesammelten Daten auszulesen ist es von Vorteil, wenn die Daten über eine kabellose Verbindung übertragen werden können. Für diese Aufgabe besitzt die vorliegende Erfindung eine Kommunikationseinheit, die eine drahtlose Kommunikation erlaubt, um die im Speicher abgelegten Daten zu übertragen. Neben den so übertragenen Daten können ebenfalls Informationen des Programms übertragen werden, die zum Einfrieren des Speichers geführt haben. Somit sind auch interne Zustände des Untersuchungsprogramms zugänglich, das den Zustand des Speichers bestimmt.
Zum Einsatz im KFZ ist die Vorrichtung in einem schlagfesten und abgedichteten Gehäuse angeordnet. Das Gehäuse hat hierbei einen Umfang, der den Einsatz im Fahrzeug nicht behindert. In der Regel handelt es sich um eine Box von der Größe eines Schuhkartons. Die Komponenten sind stromsparend ausgelegt, sodass die Versorgungsspannung durch das Fahrzeug bereitgestellt werden kann. Hierfür sind entsprechende Anschlüsse vorgesehen, die mit einem Netzteil verbunden sind.

Um die gesammelten Informationen, die die Vorrichtung während der Fahrten des Fahrzeugs aufnimmt, automatisch an eine Zentrale zu übermitteln, die die Daten auswertet, untersucht die Kommunikationseinheit die Umgebung auf mögliche Empfangsstationen. Diese Empfangsstationen sind mit Rechenzentren verbunden, die die übermittelten Daten analysieren.

Günstig ist es, wenn die Kommunikation über Funk mit UMTS, GSM, GRPS, Bluetooth, Wireless Lan oder über Infrarot erfolgt. Standardprotokolle haben den Vorteil, dass die Infrastruktur kostengünstig ist, da sie entweder schon vorhanden ist oder in großen Stückzahlen produziert wird. In der bevorzugten Ausführungsform wird auf Grund der hohen Bandbreite Wireless LAN eingesetzt.

Ein weiterer Bestandteil der Erfindung ist eine Vorrichtung zum mobilen Loggen von Informationen auf mindestens einem Bussystem, insbesondere eines CAN-Systems, deren Verarbeitungseinheit durch programmierbare Filterregeln Daten herausfiltert, um diese Daten in einem Speicher abzulegen. Auf der Basis von programmierbaren Zuständen und Ereignissen wird der Zustand des Speichers eingefroren. Ein Programm, das eine solche Vorrichtung steuert, besteht aus zwei Komponenten. In der ersten Komponente werden die Filterregeln festgelegt. Die Filterregeln legen fest, welche Informationen später für eine Analyse gespeichert werden sollen. Durch die Ereignisse wird festgelegt, wann der Speicher einzufrieren ist. Auf Grund der Ausbildung als FIFO würde der Speicher seinen Inhalt verlieren, wenn er nicht durch bestimmte Ereignisse eingefroren werden könnte. Diese Ereignisse werden i. d. R. durch besondere Zustände auf dem Bussystem, bestimmte Meldungen der Teilnehmer des Bussystems und/oder durch aus der Vorgeschichte abgeleitete interne Zustände des Programms ausgelöst. Diese Zustände und Ereignisse werden durch eine entsprechende Programmiersprache beschrieben, wobei das fertige Programm nach dem Kompilieren auf die erfindungsgemäße Vorrichtung übertragen wird, wo es dann ausgeführt wird. Es sei darauf hingewiesen, dass ebenfalls die Möglichkeit besteht das Programm zu interpretieren. In der bevorzugten Ausführungsform wird jedoch keine Verwendung davon gemacht. Für den Schutzumfang soll dies jedoch keine Einschränkung darstellen.
Das Programm kann somit in zwei Teile unterteilt werden, die je nach Art entweder parallel oder sequenziell ausgeführt werden. Sollte ein Mehrprozessorsystem vorliegen, so kann jeder Teil auf einem eigenen Prozessor als Prozess ausgeführt werden. Bei Einprozessorsystemen erfolgt i. d. R. eine sequenzielle Abarbeitung zumindest von Teilen der Prozesse. Der erste Teil des Programms übernimmt die Filterung der Daten, und bestimmt, welche Daten in den Speicher zu schreiben sind. Der zweite Prozess steuert den ersten, indem Ereignisse und Zustände überprüft werden, die zu einem Löschen oder Einfrieren des Inhalts des Speichers führen können.
Bei den Zuständen und Ereignissen handelt es sich um Variablen, Timer, Zähler, Timeouts, Flags, Nachrichtenraten, Zeitintegrale, Empfangsereignisse und zeitgesteuerte Ereignisse, die durch Verknüpfungen, wie Bedingungen oder logische bzw. arithmetische Operatoren, Start- oder Stopereignisse, die den ersten Prozess betreffen, steuern. Zur Speicherung von bestimmten Zuständen und Ereignissen sind Datenstrukturen vorgesehen, die die Aufgabe von Variablen übernehmen können, nachdem sie instanziert wurden.
Die Filterung umfasst Aufzeichnungsfilter, Wiedergabefilter und Gateway-Filter, die Daten mit bestimmten Kennungen einoder ausschließen. Das Aufzeichnungsfilter bestimmt die Daten, die während der Analyse im Speicher abgelegt werden. Das Wiedergabefilter dient dazu die Daten herauszusuchen, die später übertragen werden sollen. Gateway-Filter sind nur bei Vorhandensein mehrerer CAN- Busse sinnvoll und legen fest, welche Daten von einem Bus auf den jeweils anderen weitergeleitet werden.

Zur besseren Analyse der gesammelten Daten werden diese mit einem Zeitstempel versehen, sodass eine synchrone Wiedergabe möglich ist. Bei der Wiedergabe werden die Pakete erneut auf dem Bus gesandt, um die aufgetretene Fehlersituation beliebig oft beobachten und analysieren zu können.

Zur Übertragung des Programms dient vorzugsweise eine separate Schnittstelle. Diese kann als serielle Schnittstellen ausgebildet sein. In einer besonderen Ausführungsform wird das Programm ebenfalls über die drahtlose Verbindung übertragen. So ist es möglich ein neues Programm zu erstellen, das erst dann übertragen wird, wenn die erfindungsgemäße Vorrichtung eine Verbindung mit der Basisstation aufbaut. Diese Verbindung wird regelmäßig erst dann aufgebaut, wenn das Fahrzeug, in dem die erfindungsgemäße Vorrichtung angeordnet ist, in den Empfangsbereich der Basisstation kommt.

Ein weiterer Bestandteil der Erfindung ist ein Verfahren zur Auswertung von Daten, die über ein Bussystem übertragen werden, mit einer programmierbaren mobilen Auswerteinheit, in deren Speicher die Daten des Bussystems abgelegt werden können. Bei der Auswerteeinheit handelt es sich vorzugsweise um die erfindungsgemäße Vorrichtung. Zur Erzeugung des Programms und zum Laden der Daten sind die folgenden Schritte notwendig.

Zuerst wird ein Programm geschrieben, indem eine Programmiersprache verwendet wird, die Konstrukte zur Filterung der Daten und zum Bestimmen von Zuständen und Ereignissen aufweist. Hierbei handelt es sich vorzugsweise um die Programmiersprache, die weiter unten beschrieben wird. Nach der Entwicklung des Programms wird es kompiliert, so dass das Programm auf der Auswerteinheit (Prozessor) ausführbar ist. I. d. R. werden spezielle Compiler verwendet, die so optimieren, dass die kurzen Antwortzeiten und Reaktionszeiten erreicht werden, die notwendig sind, um den hohen Datenverkehr auf dem Bus zu analysieren. Das extern kompilierte Programm wird über die beschriebenen Schnittstellen auf die Auswerteeinheit übertragen. Die Vorrichtung ist vorzugsweise so ausgebildet, dass das Programm nach dem Laden bzw. bei jedem späteren Starten des Fahrzeugs automatisch aufgerufen wird, um die Analysetätigkeit vorzunehmen. Sobald die Ereignisse den Inhalt des Speichers eingefroren haben, wird eine Meldung, diese kann auch optisch sein, erzeugt. Nun kann mit dem Herunterladen der gesammelten Daten begonnen werden.
Nach dem Herunterladen der gesammelten Daten stehen weitere Analysetools bereit, in der Regel handelt es sich um Software, die die Informationen in unterschiedlicher Form aufbereiten. So können mehrdimensionale Abbildungen in Form von Kurven, Histogrammen oder Gebirgen erzeugt werden.
Die unterschiedlichen Formen der Übertragung der gesammelten Daten an die Basisstation wurden bereits oben beschrieben. Das Übertragen von Daten kann auch davon abhängig gemacht werden, ob bestimmte Ereignisse eingetreten sind.

Ein weiterer wichtiger Bestandteil der Erfindung ist die Programmiersprache zur Steuerung der beschriebenen Vorrichtung. Diese Programmiersprache umfasst zwei wesentliche Konstrukte. Zum einen ist es ein Konstrukt, das die Daten beschreibt, die gefiltert werden sollen und somit zumindest zeitweise gespeichert werden sollen. Zum anderen ist es ein Konstrukt, das die Spezifizierung von relevanten Zuständen und Ereignissen ermöglicht.

Beim Filterkonstrukt können die Nachrichten nach ihrem Header und nach ihrem Inhalt gefiltert werden. Der Header bestimmt i. d. R. die Bedeutung und Herkunft des Pakets. Der Inhalt kann in Abhängigkeit des Protokolls unterschiedliche Bedeutung haben. Weiterhin kann das Konstrukt verwendet werden um Daten zu bestimmen, die bei einer Simulation der Situation auf den Bus gesendet werden. Die einzelnen Arten der Zustände und Ereignisse wurden bereits oben beschrieben. Weiterhin sind sie den Unteransprüchen zu entnehmen. Die Bezeichnung für diese Merkmale ist selbstsprechend.
Die ermittelten Zustände und Ereignisse dienen i. d. R. dazu, programmierbare Start- und Stop - Triggerkriterien für jeden Speicher zu steuern. Sie können durch Operatoren beliebig miteinander verknüpft werden. Die Konstrukte hiefür sind logische sowie arithmetische Operatoren. Zum Speichern von Zuständen und Ereignissen dienen Datenstrukturen. Solche Datenstrukturen werden entsprechend des Typs der Ereignisse bereitgestellt.

Weitere Programmkonstrukte dienen dazu, bei bestimmten Ereignissen CAN - Nachrichten zu versenden. Somit kann ein real vorhandener Busteilnehmer gesteuert oder ein nicht vorhandener Busteilnehmer simuliert werden.
Mit Hilfe von Klassierungsfunktionen wie MinMax (minimaler und maximaler Wert einer Größe), Count (Häufigkeit des Auftretens eines Kriteriums) und Timer (Verweildauer bzw. Aktivzeit eines Kriteriums), die auch mehrere Dimensionen berücksichtigen können, ist es möglich, datenbezogene Erkenntnisse zu sammeln und zu korrelieren.

Ein weiteres Programmkonstrukt, wie es aus anderen Programmiersprachen bereits bekannt ist (include), ermöglicht das Laden von Makro - Definitionen, wie z.B. Paketkennungen. Diese Paketkennungen sind bei jedem Fahrzeug unterschiedlich, jedoch werden sie vom Hersteller zur Verfügung gestellt, sodass eine Decodierung möglich ist. Durch die Verwendung der Makro-Definitionen ist es möglich, den gleichen Programmcode (nach dem Kompilieren) für unterschiedliche Fahrzeuge zu verwenden.

Ein weiterer Bestandteil der Erfindung ist eine Auswerteinheit, die über eine drahtlose Verbindung mit der erfindungsgemäßen Vorrichtung kommuniziert. Für die Kommunikation ist die Vorrichtung vorzugsweise mit einer Basisstation verbunden, wobei die Basisstation über eine drahtlose Verbindung mit dem erfindungsgemäßen Daten - Logger Informationen austauscht. Bei dieser Vorrichtung handelt es sich vorzugsweise um einen herkömmlichen PC, der über ein Wireless LAN mit der erfindungsgemäßen Vorrichtung verbunden ist. Die Kommunikation erfolgt vorzugsweise mit Hilfe von bekannten Protokollen (IP). Das Protokoll, das auf IP aufbaut, ist nicht standardisiert. Es ist jedoch auch hier möglich, ein bekanntes ftp - Protokoll zu verwenden. Weiterhin kann die Auswerteeinheit so ausgebildet sein, dass sie zuerst überprüft, ob bestimmte Ereignisse eingetreten sind, bevor die Daten geladen werden. In einer anderen Ausführungsform ist es ebenfalls möglich, dass die erfindungsgemäße Vorrichtung zum Loggen von Daten eine Verbindung nicht zu Stande kommen lässt, wenn bestimmte Ereignisse nicht eingetreten sind.

Um große Datenmengen übertragen zu können, überprüft die Auswerteinheit, ob eine ausreichend hohe Bandbreite zur Verfügung steht, bevor die Datenübertragung begonnen wird. Somit überprüft die Auswerteeinheit ständig das Netzwerk mit seinen Basisstationen, um herauszufinden, ob sich neue Daten - Logger angemeldet haben.

In einer weiteren Ausführungsform erfolgt die Übertragung gesichert durch Passwörter, wobei zusätzlich die einzelnen ausgetauschten Informationen verschlüsselt werden können.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1: ein Beispielprogramm, das die wesentlichen Komponenten der Programmiersprache verwendet;
- Fig. 2: den schematischen Aufbau der erfindungsgemäßen Vorrichtung, die auf einem Realtime Linux basiert (RT- Linux), wobei sowohl Software als auch Hardwarekomponenten abgebildet sind;
- Fig. 3: die schematische Aufteilung des Datenflusses auf dem Bus, und die Speicherung der einzelnen Informationen, sowie die Steuerung der Speicher durch das Programm.

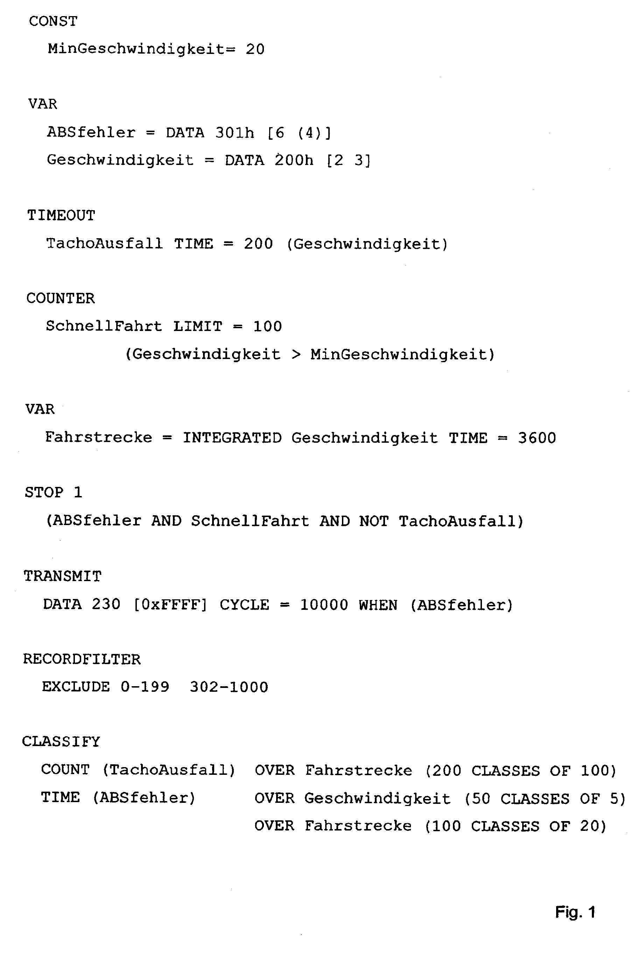

Fig. 1 ist ein Programm zu entnehmen, das aus unterschiedlichen Blöcken besteht.
Ziel ist es, Daten über Ausfälle des Antiblockiersystems (ABS) zu sammeln, die oberhalb einer bestimmten Mindestgeschwindigkeit auftreten. Hierbei darf der Tacho jedoch nicht ausgefallen sein, da die Geschwindigkeitsinformation ansonsten bedeutungslos ist. Sofern das Antiblockiersystem einen Fehler meldet, der Tacho in Ordnung ist und die Mindestgeschwindigkeit überschritten ist, soll der Speicher eingefroren werden. Alle 10 Sekunden sollen anstehende Fehlermeldungen des Antiblockiersystems gelöscht werden, indem ein entsprechendes Paket gesandt wird. Aufgezeichnet werden nur bestimmte Pakete, nicht der gesamte Busverkehr. Weiterhin werden Klassifizierungen vorgenommen, die die Anzahl von Tachoausfällen bezogen auf die Fahrstrecke und die Dauer von Ausfällen des Antiblockiersystems über der gefahrenen Geschwindigkeit speichern.

Die Konstante legt die Mindestgeschwindigkeit auf 20 Km/h fest. Die Datenpakete mit dem Header 301h enthalten im Datenbyte 6 Byte an der Bitposition 4 die Information über einen Fehler des Antiblockiersystems. Die gefahrene Geschwindigkeit wird im Paket mit dem Header 200h in den Bytes 2 und 3 übertragen.
Ein Tachoausfall liegt immer dann vor, wenn über den Zeitraum von 200 Zeiteinheiten kein Geschwindigkeitspaket gesandt wurde.
Eine dauerhaft schnelle Fahrt ("SchnellFahrt") ist immer dann gegeben, wenn das Datenpaket mit der Geschwindigkeitsinformation mindestens 100 mal in Folge empfangen wurde und die gefahrene Geschwindigkeit immer über der Mindestgeschwindigkeit liegt. Die Fahrstrecke berechnet sich als Integral über die Geschwindigkeit, wobei alle 3600 Zeiteinheiten integriert wird.
Der Speicher wird immer dann eingefroren, wenn ein Fehler des Antiblockiersystems gemeldet wird und das Fahrzeug sich dabei in dauerhaft schneller Fahrt befindet und der Tacho nicht ausgefallen ist.
Falls das Antiblockiersystem einen Fehler meldet, wird spätestens alle 10000 Zeiteinheiten eine Paket mit dem Header 230 und den entsprechend gesetzten Datenbytes gesendet, das dazu führt, daß das Antiblockiersystem die Fehleranzeige zurücknimmt.
Die Anweisung RECORDFILTER schließt die Pakete von 0 bis 199 und 302 bis 1000 von der Aufzeichnung aus. Die Pakete zwischen 200 und 301 werden hingegen im Speicherbereich abgelegt.
Eine Klassierung (Zählung) aller Tachoausfälle erfolgt über die Fahrstrecke; eine zweite Klassierung erfaßt die Dauer aller Fehler des Antiblockiersystems über der gefahrenen Geschwindigkeit und über der Fahrstrecke. Die Darstellung der Ergebnisse dieser Klassierung ist somit in einem zweidimensionalen Diagramm möglich.

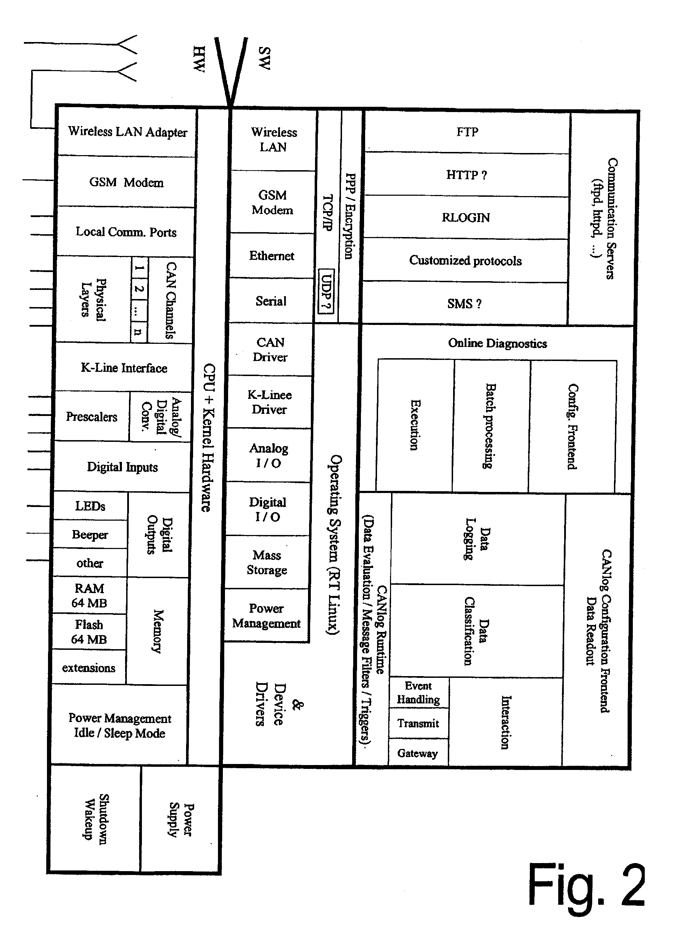

Fig. 2 zeigt den prinzipiellen Aufbau der erfindungsgemäßen Vorrichtung, wobei sowohl die Hardwareschichten als auch die einzelnen Softwareschichten beschrieben werden. Da die Zeichnung selbstsprechend ist, werden nur einige Baugruppen erwähnt.
Man sieht deutlich die Schnittstelle zwischen Hardware und Software wobei oberhalb der CPU die Software angeordnet ist, die entsprechende Treiber für die einzelnen Hardwarekomponenten bereitstellt. Auf diesen Treibern ist das Betriebssystem angeordnet, das über die Treiber auf die Hardware zugreift. Im bevorzugten Fall handelt es sich um Realtime Linux, das auf Grund seiner garantierten Antwortzeiten für diese Aufgabe prädestiniert ist. Mit steigender Bandbreiten auf den Bussystemen und steigender Anzahl von Bussystemen im Fahrzeug, die gleichzeitig überwacht werden, ist es notwendig, ein Betriebssystem zu verwenden, das garantierte Antwortzeiten bereitstellt. Auf einige Bereiche greift das Betriebssystem direkt zu, wie den Speicher. Es ist deutlich zu erkennen, dass mehrere CAN - Bussysteme gleichzeitig überwacht werden können. Die Software unterteilt sich in einen Log - Bereich und einen Klassifikationsbereich. Hierbei handelt es sich regelmäßig um ein Programm, das, bevor es auf das System übertragen wird, kompiliert wird. Dieses Programm greift in der Regel auf Bibliotheken zu, die entweder statisch oder dynamisch auf dem System mit dem Programm verbunden werden können.
Im Execution-Bereich läuft das eigentliche Programm ab, das sich der einzelnen Filter bedient.

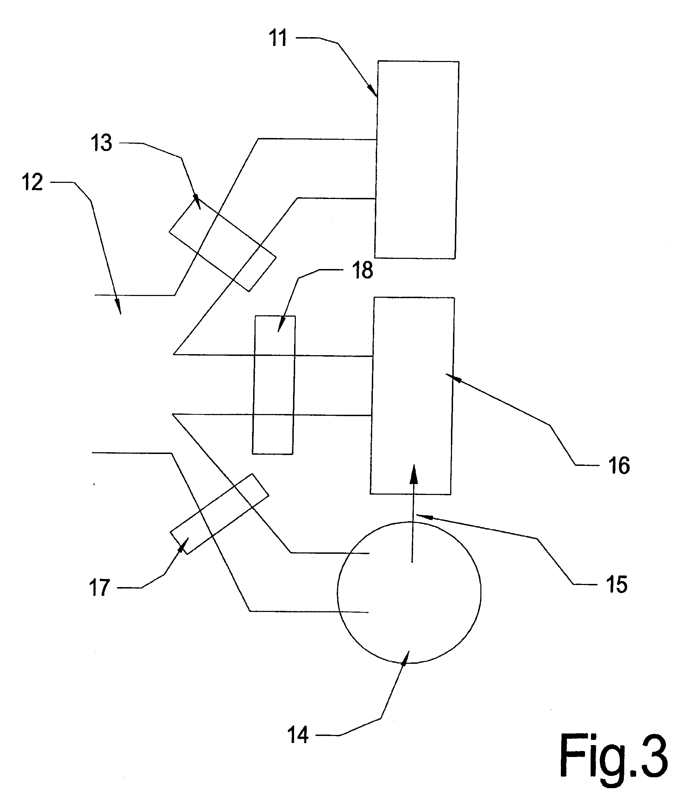

Fig. 3 zeigt den Fluss 12 der Daten und ihre Verzweigung in die einzelnen Speicherbereiche 11 und 16. Die einzelnen Daten werden hierbei gefiltert, wobei die Filter 13, 18 und 17 einzelnen Programmkonstrukten entsprechen.
Der Speicherbereich 11 dient zur Ablage von Klassierdaten. Das entsprechende Programmkonstrukt kann der Figur 1 entnommen werden. In diesen Speicher werden in Relation zueinander einoder mehrdimensionale Daten abgelegt. Der Speicherbereich 16 dient zur Ablage der einzelnen Pakete, die der RECORDFILTER hat passieren lassen. Es handelt sich bei diesem Speicher um einen FIFO - Speicher. Das entsprechende gleichlautende Programmkonstrukt kann Figur 1 entnommen werden. Der Speicherbereich 16 wird durch das Ereignis 15 nämlich STOP oder START gesteuert. Die Bearbeitungseinheit 14 verarbeitet die Datenpakete und erzeugt daraus gemäß dem Programm Zustände und Ereignisse, die von den Befehlen genutzt werden. Somit filtert ebenfalls die Bearbeitungseinheit 14 die Informationen. Dieser Filterprozess wird durch das Symbol 17 dargestellt. Aus dem Busverkehr werden nur die Datenpakete herausgefiltert, die von dem Programm auch für Berechnungen benötigt werden.

## Patentansprüche

1. Vorrichtung zum Loggen von Informationen auf mindestens einem Bussystem, insbesondere eines CAN - Systems,
- mit einer Schnittstelle zum Bussystem, über die ein Datenverkehr auf dem Bussystem analysierbar ist,
- mit einer Verarbeitungseinheit, die bestimmbare Daten aus dem Datenverkehr filtert, um diese Daten in einem Speicher abzulegen,
- mit einer Kommunikationseinheit, die eine drahtlose Kommunikation erlaubt, um vorzugsweise die im Speicher abgelegten Daten zu übertragen,
- mit einem Gehäuse, wobei das Gehäuse und die enthaltenden Komponenten hinsichtlich ihrer Größe so ausgebildet sind, dass ein mobiler Einsatz, insbesondere im KFZ, möglich ist.

2. Vorrichtung nach dem vorhergehenden Anspruch, **dadurch gekennzeichnet, dass** die Kommunikationseinheit so ausgebildet ist, dass in der Nähe von Sendern automatisch eine Verbindung aufgebaut wird, um die im Speicher liegenden Daten zu übertragen, wobei die Kommunikation über Funk vorzugsweise mit einem oder mehreren der folgenden Protokolle UMTS, GSM, GRPS, Bluetooth, Wireless Lan oder über Infrarot erfolgt.

3. Vorrichtung zum mobilen Loggen von Informationen auf mindestens einem Bussystem, insbesondere eines CAN - Systems,
- mit einer Schnittstelle zum Bussystem, über die ein Datenverkehr auf dem Bussystem analysierbar ist,
- mit einer Verarbeitungseinheit, die auf der Basis von programmierbaren Filterregeln Daten herausfiltert, um diese Daten in einem Speicher abzulegen, und die auf der Basis von programmierbaren Zuständen und/oder Ereignissen den Zustand des Speichers einfriert, insbesondere indem eine Kopie des Inhalts des Speichers erzeugt wird,
- mit einem Gehäuse, wobei das Gehäuse und die enthaltenden Komponenten hinsichtlich ihrer Größe, so ausgebildet sind, dass ein mobiler Einsatz, insbesondere im KFZ, möglich ist.

4. Vorrichtung nach einem oder mehreren der vorhergehenden Ansprüche, **dadurch gekennzeichnet, dass** die Verarbeitungseinheit den Informationsfluss auf dem Bussystem in einem diskreten Zeitraum aufzeichnet, wobei der konkrete Zeitraum kontinuierlich fortschreitet, wobei der Speicher durch eine FIFO-Regel verwaltet wird.

5. Vorrichtung nach einem oder mehreren der vorhergehenden Ansprüche, **dadurch gekennzeichnet, dass** über eine Schnittstelle ein kompiliertes Programm übertragen wird, das festlegt, welche Informationen zu filtern sind und welche Ereignisse zu berücksichtigen sind und/oder
wobei dass das Programm in zwei Teile unterteilt ist, wobei der erste Teil die Filterung der Daten übernimmt und bestimmte Daten in den Speicher schreibt, und der zweite Teil anhand der Daten auswertet, ob bestimmte Zustände oder Ereignisse eingetreten sind.

6. Vorrichtung nach dem vorhergehenden Anspruch, **dadurch gekennzeichnet, dass** die Zustände und/oder Ereignisse Variablen, Timer, Zähler, Timeouts, Flags, Nachrichtenraten, Zeitintegrale, Empfangsereignisse und/oder zeitgesteuerte Ereignisse umfassen, die durch Verknüpfungen wie Bedingungen oder logische und/oder arithmetische Operatoren verbunden werden können und die in Datenstrukturen ablegbar sind, und dass die Filterung Aufzeichnungsfilter, Wiedergabefilter und/oder bei Vorhandensein mehrerer Busse Gateway-Filter umfasst, die Daten mit bestimmten Kennungen ein- oder ausschließen.

7. Verfahren zur Auswertung von Daten, die über ein Bussystem übertragen werden, mit einer programmierbaren mobilen Auswerteeinheit, in deren Speicher die Daten des Bussystems ablegbar sind, insbesondere nach einem oder mehreren der vorhergehenden Ansprüche, mit folgenden Schritten:
- Editieren eines Programms in einer höheren Programmiersprache unter Verwendung von Konstrukten zur Filterung der Daten und zum Bestimmen von Zuständen und/oder Ereignissen,
- Kompilieren des Programms, so dass das Programm auf der Auswerteinheit ausführbar ist,
- Übertragen des Programms, auf die Auswerteinheit über eine Schnittstelle,
- Laden der gesammelten Daten des Bussystems aus dem Speicher, nach der Ausführung des Programms.

8. Verfahren nach dem vorhergehenden Verfahrensanspruch, **dadurch gekennzeichnet, dass** die Zustände und/oder Ereignisse Variablen, Timer, Zähler, Timeouts, Flags, Nachrichtenraten, Zeitintegrale, Empfangsereignisse und/oder zeitgesteuerte Ereignisse umfassen, die durch Verknüpfungen wie Bedingungen oder logische und/oder arithmetische Operatoren verbunden werden können und die in Datenstrukturen ablegbar sind, und dass die Filterung Aufzeichnungsfilter, Wiedergabefilter und/oder bei Vorhandensein mehrerer Busse Gateway-Filter umfasst, die Daten mit bestimmten Kennungen ein- oder ausschließen.

9. Verfahren nach einem oder mehreren der vorhergehenden Verfahrensansprüche, **dadurch gekennzeichnet, dass** die Daten in den Speicher drahtlos übermittelt werden, wobei das Eintreten von bestimmten Ereignissen berücksichtigt werden kann.

10. Verfahren nach dem vorhergehenden Verfahrensanspruch, **dadurch gekennzeichnet, dass** überprüft wird, ob eine Basisstation vorhanden ist, wobei eine Überprüfung von Berechtigungen und eine Verschlüsselung der zu übertragenden Daten erfolgen kann.

11. Verfahren nach einem der vorhergehenden Verfahrensansprüche, **dadurch gekennzeichnet, dass** die Kommunikation über Funk vorzugsweise mit einem oder mehreren der folgenden Protokolle UMTS, GSM, GRPS, Bluetooth, Wireless Lan oder über Infrarot erfolgt, wobei Protokolle wie TCP/IP eingesetzt werden.

12. Programmiersprache zur Steuerung einer Vorrichtung zum Loggen von Informationen auf mindestens einem Bussystem, insbesondere eines CAN - Systems, insbesondere nach einem oder mehreren der vorhergehenden Vorrichtungsansprüche, **gekennzeichnet durch** Programmkonstrukte,
- die eine Spezifizierung der Daten ermöglichen, die gefiltert werden sollen und somit zumindest zeitweise gespeichert werden sollen,
- die die Spezifizierung von Zuständen und/oder Ereignissen ermöglichen, wobei die Zustände und/oder Ereignisse Variablen, Timer, Zähler, Timeouts, Flags, Nachrichtenraten, Zeitintegrale, Empfangsereignisse und/oder zeitgesteuerte Ereignisse umfassen.

13. Programmiersprache nach dem vorhergehenden Programmiersprachenanspruch, **dadurch gekennzeichnet, dass** die Zustände und/oder Ereignisse durch Operatoren miteinander verknüpfbar sind, und Datenstrukturen definiert werden können, in denen Informationen für einen längeren Zeitraum ablegbar sind und/oder
wobei die Spezifizierung von Filtern Aufzeichnungsfilter, Wiedergabefilter und/oder bei Vorhandensein mehrerer Busse Gateway-Filter umfasst, die Daten mit bestimmten Kennungen einoder ausschließen.

14. Programmiersprache nach einem oder mehreren der vorhergehenden Programmiersprachenansprüche, **dadurch gekennzeichnet, dass** ein Programmkonstrukt vorhanden ist, dass das Einlesen von Makrodefinitionen von Paketkennungen zulässt.

15. Auswerteinheit, die über eine drahtlose Verbindung mit einer Vorrichtung zum Loggen von Informationen auf mindestens einem Bussystem, insbesondere eines CAN - Systems, mit einem Speicherbereich, in dem die geloggten Informationen ablegbar sind, kommuniziert, **gekennzeichnet durch** Mittel, insbesondere Protokolle, die nach dem Aufbau einer Verbindung die gefilterten Informationen aus dem Speicherbereich der Vorrichtung zum Loggen abrufen.

16. Auswerteinheit nach dem vorhergehenden Anspruch, **dadurch gekennzeichnet, dass** eine Verbindung immer dann aufgebaut wird, wenn eine Vorrichtung zum Loggen in einem Empfangsbereich ist, der eine hohe Datenübertragung zulässt und/oder
wobei eine Übertragung von Informationen nur dann erfolgt, wenn ein bestimmtes Ereignis, insbesondere ein Fehlerzustand, vorliegt.

17. Auswerteinheit nach einem oder mehreren der vorhergehenden Auswerteinheitansprüche, **dadurch gekennzeichnet, dass** die Übertragung verschlüsselt erfolgt, wobei ein Abrufen der Informationen aus dem Speicherbereich nur möglich ist, wenn bestimmte Kennungen ausgetauscht wurden.

18. Auswerteinheit nach einem oder mehreren der vorhergehenden Auswerteinheitansprüche, **dadurch gekennzeichnet, dass** die Kommunikation über Funk vorzugsweise mit einem oder mehreren der folgenden Protokolle UMTS, GSM, GRPS, Bluetooth, Wireless Lan oder über Infrarot erfolgt, wobei Protokolle wie TCP/IP eingesetzt werden.
